# EUROPÄISCHE PATENTANMELDUNG

(11) **EP 4 636 331 A1**
(43) Veröffentlichungstag der Anmeldung: **22.10.2025**
(21) Anmeldenummer: 25165901.7
(22) Anmeldetag: 25.03.2025
(51) Int. Cl.: F24F 12/00

(54) **HAUSTECHNIKGERÄT ZUM AUFSTELLEN IM INNEREN EINES GEBÄUDES UND VERFAHREN ZUM BETREIBEN EINES SOLCHEN HAUSTECHNIKGERÄTS**

(30) Priorität: 15.04.2024 DE 102024110551
(71) Anmelder: Stiebel Eltron GmbH & Co. KG, 37603 Holzminden (DE)
(72) Erfinder: Benning, Markus, 37671 Höxter (DE); Oxe, Christian, 34474 Diemelstadt (DE); SCHAUMLÖFFEL, Michael, 37671 Höxter (DE); Dell, Roman, 37671 Höxter (DE); STEMMER, Tobija, 37627 Stadtoldendorf (DE); Arnemann, Christian, 37671 Höxter (DE); Dreyer, Jens, 37632 Eschershausen (DE); Furchner, Florian, 37632 Eschershausen (DE)

(57) **Zusammenfassung**

Die Erfindung betrifft ein Haustechnikgerät (10) zum Aufstellen im Inneren eines Gebäudes, aufweisend - ein Gehäuse (12), - eine im Gehäuse (12) angeordnete Wärmepumpe (16), und - ein im Gehäuse (12) angeordnetes Lüftungsmodul (18) mit Wärmerückgewinnung zur gesteuerten Be- und/oder Entlüftung von mit dem Lüftungsmodul (18) fluidleitend verbundenen Räumen des Gebäudes, wobei im Gehäuse (12) ein Zuluftstrang (30) zum Zuführen eines Außenluftstroms (A_{Z}) in Richtung der Wärmepumpe (16) und des Lüftungsmoduls (18) und ein Abluftstrang (32) zum Abführen eines Abluftstroms (A_{F}) aus Richtung der Wärmepumpe (16) und des Lüftungsmoduls (18) vorgesehen ist, und das Lüftungsmodul (18) einen Wärmeübertrager (28) zum Übertragen von Wärme zwischen den durch das Lüftungsmodul (18) geführten Außenluftstrom (A_{Z}) und Abluftstrom (A_{F}) aufweist. Dem Zuluftstrang (30) zum Zuführen des in Richtung des Lüftungsmoduls (18) zugeführten Außenluftstroms (A_{Z}) ist ein Bypasskanal (50) zugeordnet, der zum Führen des Außenluftstromes (A_{Z}) vorbei am Wärmeübertrager (28) eingerichtet ist, und wobei das Lüftungsmodul (18) dazu eingerichtet ist, den Massenstrom des über den Wärmeübertrager (28) und/oder den Bypasskanal (50) geführten Außenluftstroms (A_{Z}) zu steuern.

## Beschreibung

Die Erfindung bezieht sich auf ein Haustechnikgerät zum Aufstellen im Inneren eines Gebäudes, aufweisend ein Gehäuse, eine im Gehäuse angeordnete Wärmepumpe, und ein im Gehäuse angeordnetes Lüftungsmodul mit Wärmerückgewinnung zur gesteuerten Be- und/oder Entlüftung von mit dem Lüftungsmodul fluidleitend verbundenen Räumen des Gebäudes, wobei im Gehäuse ein Zuluftstrang zum Zuführen eines Außenluftstroms in Richtung der Wärmepumpe und des Lüftungsmoduls und ein Abluftstrang zum Abführen eines Abluftstroms aus Richtung der Wärmepumpe und des Lüftungsmoduls vorgesehen ist, und das Lüftungsmodul einen Wärmeübertrager zum Übertragen von Wärme zwischen den durch das Lüftungsmodul geführten Außenluftstrom und Abluftstrom aufweist.

Solche Haustechnikgeräte sind im Stand der Technik bekannt und werden in Form von Kombigeräten zur Klimatisierung von Gebäuden eingesetzt. Für z. B. das Heizen und/oder die Warmwasseraufbereitung weist das Haustechnikgerät eine Wärmepumpe auf, mittels derer die benötigte Wärmeenergie bereitgestellt wird. Für die kontrollierte Be- und/oder Entlüftung des Gebäudes umfasst das Haustechnikgerät ferner ein Lüftungsmodul, welches über entsprechende Zuluft- und Abluftleitungen fluidleitend mit den entsprechend zu be- und/oder entlüftenden Räumen des Gebäudes verbunden ist.

Aus DE 10 2012 004 232 A1 ist z. B. ein solches Haustechnikgerät bekannt, das ein Gehäuse, eine im Gehäuse angeordnete Wärmepumpe sowie ein im Gehäuse angeordnetes Lüftungsmodul umfasst. Ferner ist im Gehäuse ein Zuluftstrang zum Zuführen eines Außenluftstroms in Richtung der Wärmepumpe und des Lüftungsmoduls und ein Abluftstrang zum Abführen eines Abluftstroms aus Richtung der Wärmepumpe und des Lüftungsmoduls vorgesehen. Um die im Abluftstrom enthaltene Wärmeenergie während des Be- und/oder Entlüftens des Gebäudes nicht einfach in die Umgebung abzuleiten, weist das Lüftungsmodul einen Wärmeübertrager zum Übertragen von Wärme zwischen dem durch das Lüftungsmodul geführten Außenluftstrom und Abluftstrom auf. Der dem Lüftungsmodul zugeführte Außenluftstrom wird im Wärmeübertrager vorgewärmt und als vorgewärmter Zuluftstrom in das Gebäude eingeleitet, was die Effizienz solcher Haustechnikgeräte erhöht.

Im Sommer und bei der Umsetzung einer Kühlfunktion mittels des Haustechnikgeräts birgt das Zuführen des Außenluftstroms in das Gebäude über den Wärmeübertrager jedoch den Nachteil, dass der Außenluftstrom unnötigerweise über den Wärmeübertrager geleitet und erwärmt wird. Um diesem Umstand zu begegnen, muss von Hand eine Sommerbypass-Kassette in das Haustechnikgerät eingesetzt werden, mit der das Leiten des Außenluftstroms über den Wärmeübertrager im Lüftungsmodul vermieden werden kann. Jedoch ist das Einsetzen einer solchen Kassette verhältnismäßig aufwendig durchzuführen und zudem darf das Wechseln/Herausnehmen vor Beginn der Heizsaison nicht vergessen werden.

Der Erfindung lag daher die Aufgabe zugrunde, ein Haustechnikgerät der vorbezeichneten Gattung anzugeben, mittels dessen das Umgehen des Wärmeübertragers durch den Außenluftstrom auf vereinfachte und kontrollierbare Weise möglich ist. Insbesondere lag der Erfindung die Aufgabe zugrunde, ein Haustechnikgerät aufzuzeigen, das zu bestehenden Haustechnikgeräten eine alternative Ausgestaltung darstellt.

Die Erfindung löst die ihr zugrundeliegende Aufgabe gemäß einem ersten Aspekt durch ein Haustechnikgerät mit den Merkmalen von Anspruch 1. Insbesondere ist vorgesehen, dass dem Zuluftstrang zum Zuführen des in Richtung des Lüftungsmoduls zugeführten Außenluftstroms ein Bypasskanal zugeordnet ist, der zum Führen des Außenluftstroms vorbei am Wärmeübertrager eingerichtet ist, und wobei das Lüftungsmodul dazu eingerichtet ist, den Massenstrom des über den Wärmeübertrager und/oder den Bypasskanal geführten Teilstroms des Außenluftstroms zu steuern.

Der Erfindung liegt die Erkenntnis zugrunde, mittels des im oder am Lüftungsmodul ausgebildeten Bypasskanals, wobei der Massenstrom des über den Wärmeübertrager und/oder den Bypasskanal geführten Außenluftstroms mittels des Lüftungsmoduls selbst gesteuert wird, ein vereinfachtes und insbesondere im Kühlbetrieb seitens des Haustechnikgeräts umsetzbares Umlenken des dem Lüftungsmodul zugeführten Außenluftstroms vorbei am Wärmeübertrager zu ermöglichen. Mit dem Steuern des Massenstroms durch das Lüftungsgerät selbst ist ein Eingreifen von Hand in das Haustechnikgerät nicht mehr notwendig, womit die erfindungsgemäße Ausgestaltung des Haustechnikgeräts dessen vereinfachten Betrieb ermöglicht. Mittels des vorzugsweise fest innerhalb des Gehäuses des Haustechnikgeräts angeordneten Bypasskanals erfolgt ein bevorzugt bedarfsgerechtes Führen des Außenluftstroms im Lüftungsmodul entweder nur über den Wärmeübertrager oder nur über den Bypasskanal bzw. über den Wärmeübertrager und den Bypasskanal gleichzeitig. Unter dem gleichzeitigen Führen des Außenluftstroms ist das Aufteilen des Außenluftstroms auf den Wärmeübertrager und den Bypasskanal zu verstehen.

Gemäß einer bevorzugten Ausgestaltung des erfindungsgemäßen Haustechnikgeräts ist vorgesehen, dass der Zuluftstrang in einen ersten Teilstrang zum Zuführen eines Teilstroms des Außenluftstroms zum Lüftungsmodul und in einen parallel zum ersten Teilstrang angeordneten, zweiten Teilstrang zum Führen eines Teilstroms des Außenluftstroms zur Wärmepumpe unterteilt ist, wobei der Bypasskanal dem ersten Teilstrang zugeordnet ist. Vorzugsweise wird mittels des Lüftungsmoduls nur ein Teilstrom des insgesamt durch das Gehäuse hindurchgeführten Außenluftstroms und des Abluftstroms für die Be- und Entlüftung durch das Lüftungsmodul benötigt. Insbesondere werden in Abhängigkeit von verschiedenen mittels des Haustechnikgeräts umsetzbaren Betriebsmodi vom Lüftungsmodul etwas 5 bis 25 % des dem Haustechnikgerät insgesamt zugeführten Außenluftstroms und des davon abgeführten Abluftstroms für die Be- und Entlüftung verwendet. Vorzugsweise wird der Großteil des dem Haustechnikgerät zugeführten Außenluftstroms und des vom Haustechnikgerät weggeführten Abluftstroms von der ebenfalls im Haustechnikgerät angeordneten Wärmepumpe zum Erzeugen der benötigten Wärmeenergie zum Heizen und zur Warmwasseraufbereitung genutzt. In einer bevorzugten Ausführung erfolgt die Unterteilung des Zuluftstrangs in den ersten und zweiten Teilstrang kurz nach Zuführen des Gesamt-Außenluftstroms in das Gehäuse des Haustechnikgeräts, wobei die Einlassbereiche von erstem und zweitem Teilstrang bevorzugt benachbart zueinander angeordnet sind. Damit ist eine einfache Aufteilung des Außenluftstroms auf die verschiedenen Teilstränge des Zuluftstrangs im Gehäuse bewirkt.

Eine Weiterbildung sieht vor, dass der Zuluftstrang, vorzugsweise der erste Teilstrang, in seinem Einlassbereich ein Filterelement aufweist und der Bypasskanal, insbesondere im ersten Teilstrang, hinter dem Filterelement abzweigt. Mithilfe des Filterelements erfolgt das Reinigen des dem Haustechnikgerät zugeführten Außenluftstroms, wodurch grobe Schmutzpartikel nicht in den Zuluftstrang gelangen und einer Verschmutzung insbesondere des Wärmeübertragers im Lüftungsmodul und des Verdampfers der Wärmepumpe entgegengewirkt ist. Der Bypasskanal zweigt vorzugsweise kurz hinter dem Filterelement im Einlassbereich des Zuluftstrangs, insbesondere des ersten Teilstrangs, ab. Damit ist im Kühlbetrieb des Geräts ein unnötiges Führen des über den Bypasskanal zu führenden Außenluftstroms in seiner sonst üblicherweise geführten Richtung vermieden. Insbesondere erfolgt mittels des Bypasskanals eine fluidleitende, vorzugsweise verkürzte Verbindung zwischen einem dem Wärmeübertrager vorgelagerten Abschnitt im Zuluftstrang und einem dem Wärmeübertrager nachgelagerten Abschnitt im Zuluftstrang.

Mit dem Führen des Außenluftstroms über den Bypasskanal vorbei am Wärmeübertrager ist zudem der Widerstand für den durch den Zuluftstrang geführten Außenluftstrom verringert.

Vorzugsweise ist der Zuluftstrang, insbesondere der erste Teilstrang des Zuluftstrangs, in einem seitlich zum Wärmeübertrager versetzt angeordneten Abschnitt des Gehäuses ausgebildet. Mit Ausbilden des Zuluftstrangs, insbesondere des ersten und zweiten Teilstrangs in einem im Bereich des Gehäuses seitlich zum Wärmeübertrager ist ein strukturell einfaches Ausbilden und Abzweigen des Bypasskanals im Zuluftstrang sowie ein simples Vorbeileiten des Bypasskanals am Wärmeübertrager und Herstellen einer fluidleitenden Verbindung mit einem stromabwärts des Wärmeübertragers angeordneten Abschnitt des Zuluftstrangs zum Zuführen des weiterhin "kalten" Außenluftstroms im Lüftungsmodul ermöglicht.

Gemäß einer bevorzugten Weiterbildung des Haustechnikgeräts definiert der erste Teilstrang des Zuluftstrangs ausgehend von seinem Einlassbereich einen im Wesentlichen nach unten gerichtete Strömungskanal für den in Richtung des Wärmeübertragers geführten Außenluftstrom und der Bypasskanal definiert ausgehend vom Einlassbereich des ersten Teilstrangs einen im Wesentlichen schräg nach oben gerichteten Strömungskanal.. Vorzugsweise wird ein über den Wärmeübertrager geführter Teil des Außenluftstroms über den ersten Teilstrang in einen Bereich unterhalb des Wärmeübertragers am Lüftungsmodul geführt, von dem aus der Außenluftstrom durch den Wärmeübertrager geleitet wird. Der aus den Wärmeübertrager austretende Außenluftstrom tritt auf der entgegengesetzten Gehäuseseite und insbesondere in einem Bereich nahe der Oberseite des Wärmeübertragers aus. Mithilfe des Bypasskanals erfolgt entgegen der üblichen Luftführung des Außenluftstroms im ersten Teilstrang eine unmittelbare Umlenkung des Außenluftstroms in Richtung eines Bereichs des Gehäuses, in dem normalerweise der geführte Außenluftstrom aus dem Wärmeübertrager austritt.

Vorzugsweise verlaufen die Strömungsrichtungen vom ersten Teilstrang und vom Bypasskanal etwa in entgegengesetzte Richtungen zueinander. Damit ist erreicht, dass der in Richtung des Wärmeübertragers und/oder des Bypasskanals geführte Teil des Außenluftstroms gezielt, also auf direkten Wege und ohne unnötige Umleitungen, in die entsprechende Richtung geführt wird, in der der Außenluftstrom benötigt wird.

Eine bevorzugte Weiterbildung des erfindungsgemäßen Haustechnikgeräts sieht vor, dass entlang eines Abschnitts des ersten Teilstrangs des Zuluftstrangs und entlang eines Abschnitts des Bypasskanals jeweils ein Klappenteil angeordnet, welches zwischen einer den ersten Teilstrang und/oder den Bypasskanal versperrenden Schließstellung und einer den ersten Teilstrang und/oder den Bypasskanal freigebenden Offenstellung hin- und herbewegbar ist. Mit den in Abschnitten des ersten Teilstrangs und/oder des Bypasskanals angeordneten Klappenteilen ist eine konstruktiv einfache Ausgestaltung für das Umsetzen eines mittels des Lüftungsmoduls gesteuerten Massenstroms des über den Wärmeübertrager und/oder durch den Bypasskanal geführten Teils des Außenluftstroms bewirkt. Mithilfe solcher Klappenteile kann sowohl der in Richtung des Wärmeübertragers führende Teilstrang als auch der am Wärmeübertrager vorbeiführende Bypasskanal einfach verschlossen oder geöffnet werden.

In einer bevorzugten Ausführung sind die Klappenteile jeweils einer in einem Abschnitt des ersten Teilstrangs bzw. des Bypasskanals ausgebildeten Durchtrittsöffnung zugeordnet. Die Klappenteile sind jeweils schwenkbar im ersten Teilstrang bzw. im Bypasskanal angeordnet und liegen insbesondere in ihrer Schließstellung abdichtend an Wandflächen des ersten Teilstrangs bzw. des Bypasskanals an.

Vorzugsweise weist jedes Klappenteil einen Stellantrieb zum Verstellen des Klappenteils zwischen seiner Schließstellung und seiner Offenstellung auf. Mithilfe des an einem jeweiligen Klappenteil angreifende Stellantriebs ist eine gezielte Ansteuerung des jeweils beweglich, insbesondere schwenkbar am Gehäuse des Haustechnikgeräts im Lüftungsmodul angelenkten Klappenteils bewirkt. Vorzugsweise wirken die Stellantriebe signalleitend mit einer Steuerungseinrichtung des Haustechnikgeräts zusammen. In Abhängigkeit von dem an der Steuereinrichtung eingestellten bzw. mittels der Steuereinrichtung umgesetzten Betriebsmodus erfolgt ein vordefiniertes Ansteuern der Klappenteile und damit das Öffnen bzw. Versperren des ersten Teilstrangs bzw. des Bypasskanals. In einer möglichen Ausgestaltung der Erfindung werden die Klappenteile so angesteuert, dass diese Zwischenstellungen zwischen der den Bypasskanal bzw. den ersten Teilstrang vollständig verschließenden Schließstellung und der den Bypasskanal bzw. den ersten Teilstrang vollständig freigebenden Offenstellung einnehmen können.

Eine bevorzugte Weiterbildung des Haustechnikgeräts sieht vor, dass ein Abschnitt und/oder Bereiche des Bypasskanals mittels eines separat zum Gehäuse ausgebildeten Kanalteils ausgebildet sind, das zumindest bereichsweise Wandbereiche des zweiten Teilstrangs des Zuluftstrangs innerhalb des Gehäuses definiert. Statt das Gehäuse, welches vorzugsweise aus einem expandierten Polystyrol oder Polypropylen ausgebildet sein kann, für die Ausgestaltung des Bypasskanals aufwendig umzugestalten, sind an diesem bevorzugt nur Ausnehmungen für entsprechende Ein- und Auslassöffnungen des am Gehäuse auszubildenden Bypasskanals vorzusehen. Das separate und bevorzugt vollständig vorkonfektionierte Kanalteil ist dann mit den jeweiligen Ein- und Auslassöffnungen des zu bildenden Bypasskanals abdichtend in Anlage zu bringen. Vorzugsweise bildet das mit bereits bestehenden Wandabschnitten des Gehäuses des Haustechnikgeräts in Kontakt zu bringende Kanalteil Wandbereiche von insbesondere dem zweiten Teilstrang des Zuluftstrangs aus. Insbesondere steht das den Bypasskanal ausbildende Kanalteil geringfügig in den freien Querschnitt des zweiten Teilstrangs des Zuluftstrangs zum Zuführen des Teils des Außenluftstroms in Richtung der Wärmepumpe vor.

In einer bevorzugten Weiterbildung des erfindungsgemäßen Haustechnikgeräts ist eine Steuereinrichtung vorgesehen, welche dazu eingerichtet ist, den Massenstrom des über den Bypasskanal geführten Außenluftstroms in Abhängigkeit von der erfassten Außenluft- und/oder Ablufttemperaturen zu steuern, vorzugsweise durch Ansteuern der die Klappenteile bewegenden Stellantriebe. Mittels einer erfindungsgemäßen Steuereinrichtung ist ein vorzugsweise automatisiertes Freigeben bzw. Versperren des Bypasskanals oder des ersten, in Richtung des Wärmeübertragers führenden Teilstrangs des Zuluftstrangs möglich. Das automatisierte Freigeben bzw. Versperren erfolgt insbesondere in Abhängigkeit der mittels der Steuereinrichtung überwachten Temperaturen im Außenluftstrom und im Abluftstrom und unter Berücksichtigung der an der Steuereinrichtung des Haustechnikgeräts eingestellten Betriebsmodi. Im Falle eines an der Steuereinrichtung eingestellten Heizbetriebs bleibt der Bypasskanal dauerhaft versperrt und der erste Teilstrang in Richtung des Wärmeübertragers ist geöffnet. Im Falle eines an der Steuereinrichtung eingestellten Kühlbetriebs wird, wenn die Temperatur des Außenluftstroms unterhalb der Temperatur des Abluftstroms liegt, der Bypasskanal geöffnet und der erste Teilstrang des Zuluftstrangs versperrt. Der in den ersten Teilstrang des Zuluftstrangs eintretende Außenluftstrom wird direkt über den Bypasskanal umgelenkt und einem Abschnitt des Zuluftstrangs zugeführt, der in Strömungsrichtung des Außenluftstroms stromabwärts des Wärmeübertragers angeordnet ist.

Eine Weiterbildung des erfindungsgemäßen Haustechnikgeräts sieht vor, dass innerhalb des Gehäuses mindestens eine Lüftereinheit angeordnet ist, welche zum Erzeugen des Außenluftstroms eingerichtet ist, und zusätzlich mindestens eine Lüftereinheit angeordnet ist, welche zum Erzeugen des Abluftstroms eingerichtet ist. Mithilfe der im Lüftungsmodul vorhandenen Lüftereinheiten, welche ebenfalls durch die Steuereinrichtung des Haustechnikgeräts angesteuert werden, erfolgt das bedarfsgerechte Erzeugen der zur Be- und/oder Entlüftung der Räume im Gebäude benötigten Zu- und Abluftströme. Die Lüftereinheiten des Lüftungsmoduls sind vorzugsweise zwischen einer Mindest- und einer Maximaldrehzahl individuell und stufenlos einstellbar, wodurch eine optimale Anpassung der mittels der Lüftereinheiten erzeugten Massenströme an die jeweils von der Steuereinrichtung ermittelten Betriebsparameter des Haustechnikgeräts möglich ist.

Gemäß einem zweiten Aspekt betrifft die Erfindung ein Verfahren zum Betreiben eines Haustechnikgeräts, insbesondere eines Haustechnikgeräts nach einer der vorstehend beschriebenen bevorzugten Ausführungsformen, wobei das Haustechnikgerät als Kombigerät ausgebildet ist, umfassend eine Wärmepumpe und ein Lüftungsmodul zur gesteuerten Be- und/oder Entlüftung von mit dem Lüftungsmodul fluidleitend verbundenen Räumen eines Gebäudes, wobei das Lüftungsmodul einen Wärmeübertrager zum Übertragen von Wärme zwischen den durch das Lüftungsmodul des Haustechnikgeräts geführten Außenluft- und Abluftstrom aufweist.

Das erfindungsgemäße Verfahren löst auch die dem Haustechnikgerät zugrunde gelegte Aufgabe mit zumindest dem Schritt: Umlenken des Außenluftstroms innerhalb des Gehäuses vorbei an dem im Lüftungsmodul angeordneten Wärmeübertrager, bei aktiviertem Kühlbetrieb des Haustechnikgeräts und sofern die erfasste Außenlufttemperatur unterhalb der erfassten Ablufttemperatur liegt, vorzugsweise mittels eines Bypasskanals, welcher einem im Lüftungsmodul ausgebildeten Zuluftstrang zugeordnet ist, und wobei der Massenstrom des durch den Bypasskanal geführten Außenluftstroms steuerbar ist.

Mithilfe der erfindungsgemäßen Verfahrensschritte ist das Betreiben eines Haustechnikgeräts im Kühlbetrieb vereinfacht, da nunmehr mittels des Haustechnikgeräts selbst, ohne zuvor von Hand strukturelle Veränderungen am Haustechnikgerät vornehmen zu müssen, der Wärmeübertrager im Lüftungsmodul umgangen und kühle Außenluft, also Außenluft mit einer Temperatur, die unterhalb der Ablufttemperatur liegt, in einen mit dem Gehäuse verbundene Zuluftkanal eingeleitet werden kann, ohne ein unnötiges Erwärmen des Außenluftstroms durch das zwangsweise Führen über den Wärmeübertrager vorzunehmen. Das Erzeugen des durch das Gehäuse des Haustechnikgeräts, insbesondere durch das Lüftungsmodul geführten Außenluftstroms und Abluftstroms erfolgt bevorzugt mithilfe entsprechender am Lüftungsmodul vorgesehener Lüftereinheiten.

Die zum erfindungsgemäßen Haustechnikgerät gemäß dem ersten Aspekt beschriebenen, bevorzugten Ausführungsformen bzw. Weiterbildungen sind zugleich auch bevorzugte Ausführungsformen des erfindungsgemäßen Verfahrens zum Betreiben eines solchen Haustechnikgeräts. Insbesondere ist vorgesehen, dass zumindest der dem Gehäuse des Haustechnikgeräts zugeführte Außenluftstrom in einem Abschnitt des Gehäuses in einen ersten Teilstrom, der in Richtung des Lüftungsmoduls geführt wird, und einen zweiten Teilstrom unterteilt wird, der in Richtung der Wärmepumpe geführt wird. Vorzugsweise ist der in Richtung der Wärmepumpe, insbesondere über einen Verdampfer der Wärmepumpe geführte Außenluftstrom mindestens dreimal so groß wie der in Richtung des Lüftungsmoduls geführte Teilstrom des Außenluftstroms.

Die Erfindung wird im Folgenden anhand eines bevorzugten Ausführungsbeispiels eines Haustechnikgeräts unter Bezugnahme auf die beigefügten Figuren näher beschrieben. Hierbei zeigen:
- Fig. 1:: eine Vorderansicht eines erfindungsgemäßen Haustechnikgeräts in einer Schnittdarstellung;
- Fig. 2:: eine perspektivische Ansicht des Haustechnikgeräts mit entfernter Seitenwand;
- Fig. 3:: eine perspektivische Teilansicht des erfindungsgemäßen Haustechnikgeräts mit einem zum Teil in Lgeschnittenen Zuluftstrang;
- Fig. 4:: eine perspektivische Teilansicht des erfindungsgemäßen Haustechnikgeräts mit einem quer zur Strömungsrichtung geschnitten dargestellten Zuluftstrang, und
- Fig. 5:: eine Teilansicht des Haustechnikgeräts im Schnitt, welche das Innere des Lüftungsmoduls zeigt.

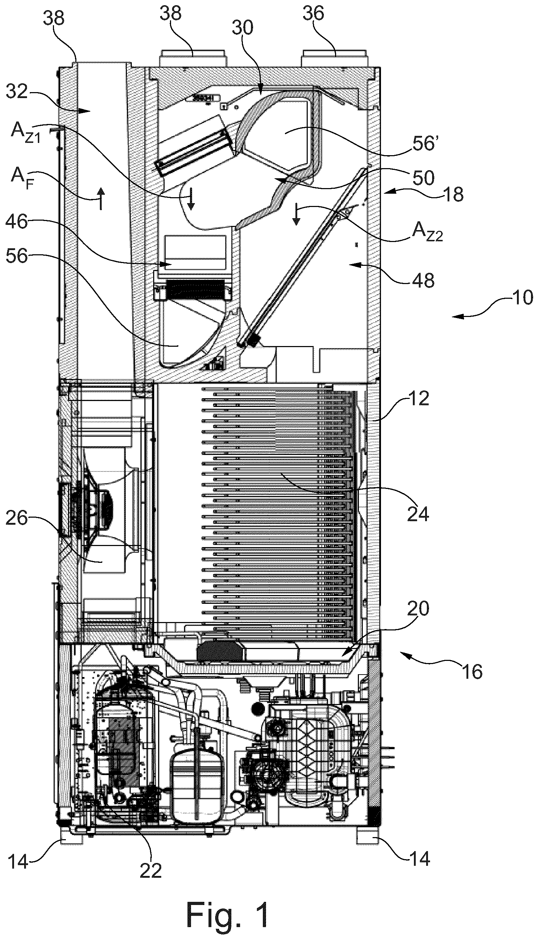

Fig. 1 zeigt den prinzipiellen Aufbau eines erfindungsgemäßen Haustechnikgeräts 10. Das Haustechnikgerät 10 umfasst ein Gehäuse 12, das an seiner Unterseite mit mehreren Aufstellfüßen 14 ausgerüstet ist. Das Gerät 10 ist als Kombigerät ausgebildet und umfasst eine im Gehäuse 12 angeordnete Wärmepumpe 16 und ein im Gehäuse 12 angeordnetes Lüftungsmodul 18.

Die im Gehäuse 12 angeordnete Wärmepumpe 16 wird insbesondere zum Erzeugen von Wärmeenergie für das Heizen und/oder die Warmwasseraufbereitung in einem Gebäude verwendet. Die Wärmepumpe 16 umfasst dazu einen Kältemittelkreislauf 20 mit einem Verdichter 22, einem Verdampfer 24 sowie einem nicht näher gezeigten Verflüssiger und einem Expansionsventil. Ferner weist die Wärmepumpe 16 eine Lüftereinheit 26 auf, mittels derer zumindest ein Teil eines dem Haustechnikgerät 10 zugeführten Außenluftstroms A_{Z}, wie unten im Detail näher erläutert, durch den Verdampfer 24 geleitet wird.

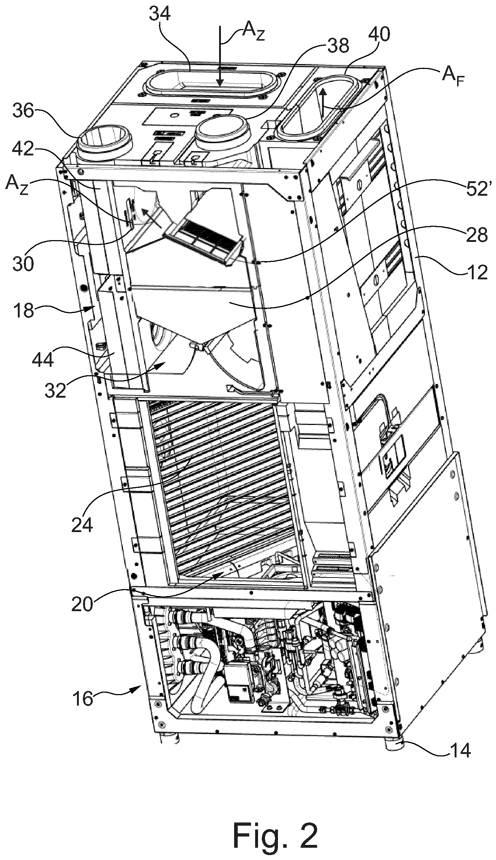

Oberhalb der Wärmepumpe 16 ist im Gehäuse 12 das Lüftungsmodul 18 angeordnet, welches zum gesteuerten Be- und/oder Entlüften von mit dem Lüftungsmodul 18 fluidleitend verbundenen Räumen eines Gebäudes eingerichtet ist. Das Lüftungsmodul 18 umfasst, wie Fig.2 näher zeigt, einen im Gehäuse 12 des Geräts 10 angeordneten Wärmeübertrager 28 zum Übertragen von Wärme zwischen zumindest Teilströmen des durch das Gehäuse geführten Außenluftstroms A_{Z} und Abluftstroms A_{F}. Im Gehäuse 12 ist ein Zuluftstrang 30 zum Zuführen des Außenluftstroms A_{Z} in Richtung der Wärmepumpe 16 und des Lüftungsmoduls 18 und ein Abluftstrang 32 zum Abführen des Abluftstroms A_{F} aus Richtung der Wärmepumpe 16 und des Lüftungsmoduls 18 vorgesehen.

Wie aus Fig. 2 ersichtlich, ist an der Oberseite des Gehäuses 12 ein Außenlufteinlass 34, über den der Außenluftstrom A_{Z} in das Gehäuse 12 eingeleitet wird, und ein Zuluftauslass 36 angeordnet, über den ein Teilstrom A_{Z1} des Außenluftstroms A_{Z} nach Durchströmen des Lüftungsmoduls 18 in Richtung der mit dem Gerät 10 fluidleitend verbundenen Räume geleitet wird. Ferner ist an der Oberseite des Gehäuses 12 ein Ablufteinlass 38, über den der aus den Räumen des Gebäudes abgeführte Abluftstrom A_{F} in Richtung des Wärmeübertragers 28 in das Gehäuse 12 eingeleitet wird, und ein Fortluftauslass 40 vorgesehen, über den der aus dem Lüftungsmodul 18 und der Wärmepumpe 16 kommende Abluftstrom A_{F} aus dem Gehäuse 12 heraus und über einen am Fortluftauslass 40 angeschlossenen, nicht näher gezeigten Leitungsabschnitt in die Umgebung geleitet wird.

Das Lüftungsmodul 18 umfasst zwei Lüftereinheiten 42, 44, mittels derer der Außenluftstrom A_{Z} und der Abluftstrom A_{F} durch den im Lüftungsmodul 18 ausgebildeten Zuluftstrang 30 und Abluftstrang 32 gefördert werden. Wie ferner in Fig.2 gezeigt, ist im Abluftstrang 32 in Strömungsrichtung vor dem Wärmeübertrager 28 ein Filterelement 52' angeordnet.

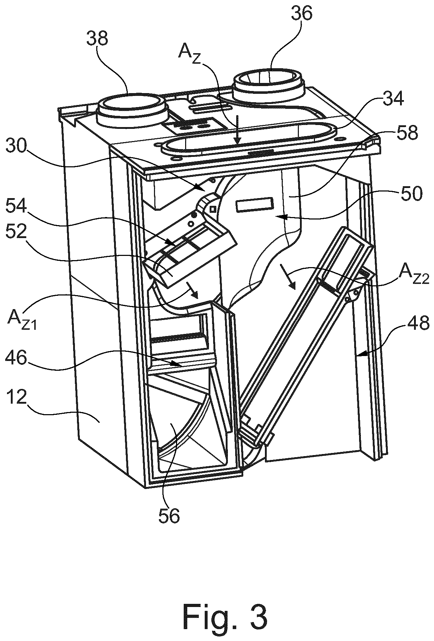

Wie aus Fig. 3 ersichtlich, ist der Zuluftstrang 30 in einen ersten Teilstrang 46 und einen zweiten Teilstrang 48 unterteilt. Der erste Teilstrang 46 ist dazu eingerichtet, einen Teil des Außenluftstroms A_{Z} in Richtung des Lüftungsmoduls 18 zu führen und der zweite Teilstrang 48 ist dazu eingerichtet, einen Teil des Außenluftstroms A_{Z} in Richtung der unterhalb des Lüftungsmodul 18 angeordneten Wärmepumpe 16 zu führen.

Im Zuluftstrang 30, insbesondere im ersten Teilstrang 46, zum Zuführen des in Richtung des Lüftungsmoduls 18 zugeführten Teilstroms A_{Z1} des Außenluftstroms A_{Z} ist ein Bypasskanal 50 angeordnet. Mittels des Bypasskanals 50 kann der dem Lüftungsmodul 18 zugeführte Teilstrom A_{Z1} des Außenluftstroms A_{Z} vorbei am Wärmeübertrager 28 in einen Abschnitt stromabwärts des Wärmeübertragers 28 des Zuluftstrangs 30 umgeleitet werden. Das Lüftungsmodul 18 ist insbesondere dazu eingerichtet, den Massenstrom des über den Wärmeübertrager 28 und/oder den Bypasskanal 50 geführten Außenluftstroms A_{Z} zu steuern, insbesondere mittels einer nicht näher gezeigten Steuereinrichtung.

Wie aus Fig. 3 ferner ersichtlich, sind der erste Teilstrang 46 und der zweite Teilstrang 48 parallel zueinander angeordnet, wobei im zweiten Teilstrang 48, wegen seiner im Vergleich zum ersten Teilstrang 46 größeren Abmessungen, ein um mindestens das Dreifache größerer Massen- oder Volumenstrom des Außenluftstroms A_{Z} strömen kann.

Im Zuluftstrang 30 ist ferner ein Filterelement 52 angeordnet, mittels dessen zumindest der in Richtung des Lüftungsmoduls 18 geführte Außenluftstrom A_{Z} von Verunreinigungen befreit wird. Der den Zuluftstrang 30 in den ersten Teilstrang 46 und den zweiten Teilstrang 48 unterteilende Abschnitt ist in einem Bereich des Gehäuses 12 ausgebildet, der seitlich zum Wärmeübertrager 28 versetzt angeordnet ist. Der erste Teilstrang 46 des Zuluftstrangs 30 weist ausgehend von seinem Einlassbereich 54 eine im Wesentlichen nach unten gerichtete Strömungsrichtung auf. Der Bypasskanal 50 weist hingegen ausgehend vom Einlassbereich 54 des ersten Teilstrangs 46 eine im Wesentlichen schräg nach oben gerichtete Strömungsrichtung auf. Mithilfe des Bypasskanals 50 erfolgt eine unmittelbare Umlenkung des Außenluftstroms A_{Z} unmittelbar nach Eintritt in den ersten Teilstrang 46. In einer bevorzugten Ausführung verlaufen die Strömungsrichtungen von erstem Teilstrang 46 und Bypasskanal 50 etwa in entgegengesetzte Richtungen zueinander.

Um den Massenstrom des über den Wärmeübertrager 28 und/oder den Bypasskanal 50 geführten Teilstroms A_{Z1} des Außenluftstroms A_{Z} steuern zu können, ist entlang eines Abschnitts des ersten Teilstrangs 46 im Zuluftstrang 30 und entlang eines Abschnitts des Bypasskanals 50 jeweils ein Klappenteil 56, 56' angeordnet, welches zwischen einer den ersten Teilstrang 46 und/oder den Bypasskanal 50 versperrenden Schließstellung und einer den ersten Teilstrang 46 und/oder den Bypasskanal 50 freigebenden Offenstellung hin- und herbewegbar ist.

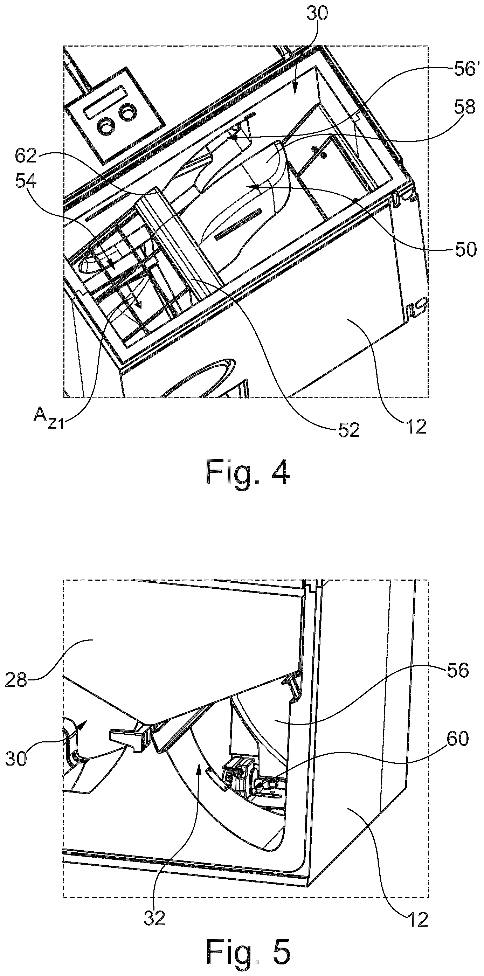

Wie den Fig. 3 und 4 ferner zu entnehmen, sind ein Abschnitt und/oder Bereiche des Bypasskanals 50 mittels eines separat zum Gehäuse 12 ausgebildeten Kanalteils 58 ausgebildet, das zumindest bereichsweise Wandbereiche des zweiten Teilstrangs 48 des Zuluftstrangs 30 innerhalb des Gehäuses 12 ausbildet.

Das Haustechnikgerät 10 weist ferner eine nicht näher dargestellte Steuereinrichtung auf, welche dazu eingerichtet ist, den Massenstrom des über den Bypasskanal 50 geführten Außenluftstroms A_{Z} in Abhängigkeit von den erfassten Außenluftstrom- und/oder Abluftstromtemperaturen zu steuern, vorzugsweise durch Verstellen der dem ersten Teilstrang 46 und dem Bypasskanal 50 zugeordneten Klappenteile 56, 56'.

Zumindest im Zuluftstrang 30 des Gehäuses 12 ist, wie Fig.4 zeigt, ein Temperatursensor 62 angeordnet, welcher vorliegend dazu eingerichtet ist, die Außenlufttemperatur zu erfassen. Innerhalb des Gehäuses 12 kann ein weiterer nicht näher gezeigter Temperatursensor vorgesehen sein, mittels dem die Ablufttemperatur im Abluftstrang 32 erfasst wird.

Wie ferner Fig. 5 verdeutlicht, weist jedes Klappenteil 56, 56' einen Stellantrieb 60 zum Verstellen des Klappenteils 56, 56' im ersten Teilstrang 46 oder dem Bypasskanal 50 zwischen seiner Schließstellung und seiner Offenstellung auf.

Das erfindungsgemäße Haustechnikgerät 10 ist insbesondere zum Ausführen eines Verfahrens eingerichtet, umfassend zumindest den Schritt: Umlenken des Außenluftstroms A_{Z} innerhalb des Gehäuses 12 vorbei an dem im Lüftungsmodul 18 angeordneten Wärmeübertrager 28 bei aktiviertem Kühlbetrieb des Haustechnikgeräts 10 und sofern die erfasste Außenlufttemperatur unterhalb der erfassten Ablufttemperatur liegt; vorzugsweise mittels eines Bypasskanals 50, der in einem im Lüftungsmodul 18 ausgebildeten Zuluftstrang 30, insbesondere einem ersten Teilstrang 46, angeordnet ist.

### Bezugszeichenliste:

- 10: Haustechnikgerät
- 12: Gehäuse
- 14: Fuß
- 16: Wärmepumpe
- 18: Lüftungsmodul
- 20: Kältemittelkreislauf
- 22: Verdichter
- 24: Verdampfer
- 26: Lüftereinheit
- 28: Wärmeübertrager
- 30: Zuluftstrang
- 32: Abluftstrang
- 34: Außenlufteinlass
- 36: Zuluftauslass
- 38: Ablufteinlass
- 40: Fortluftauslass
- 42, 44: Lüftereinheit
- 46: erster Teilstrang
- 48: zweiter Teilstrang
- 50: Bypasskanal
- 52: Filterelement
- 54,: Einlassbereich
- 56, 56': Klappenteil
- 58: Kanalteil
- 60: Stellantrieb
- 62: Temperatursensor
- A_{Z}: Außenluftstrom
- A_{Z1}, A_{Z2}: Teilstrom
- A_{F}: Abluftstrom

## Patentansprüche

1. Haustechnikgerät (10) zum Aufstellen im Inneren eines Gebäudes, aufweisend
- ein Gehäuse (12),
- eine im Gehäuse (12) angeordnete Wärmepumpe (16), und
- ein im Gehäuse (12) angeordnetes Lüftungsmodul (18) mit Wärmerückgewinnung zur gesteuerten Be- und/oder Entlüftung von mit dem Lüftungsmodul (18) fluidleitend verbundenen Räumen des Gebäudes, wobei
im Gehäuse (12) ein Zuluftstrang (30) zum Zuführen eines Außenluftstroms (A_{Z}) in Richtung der Wärmepumpe (16) und des Lüftungsmoduls (18) und ein Abluftstrang (32) zum Abführen eines Abluftstroms (A_{F}) aus Richtung der Wärmepumpe (16) und des Lüftungsmoduls (18) vorgesehen ist, und
das Lüftungsmodul (18) einen Wärmeübertrager (28) zum Übertragen von Wärme zwischen den durch das Lüftungsmodul (18) geführten Außenluftstrom (A_{Z}) und Abluftstrom (A_{F}) aufweist,
**dadurch gekennzeichnet, dass** dem Zuluftstrang (30) zum Zuführen des in Richtung des Lüftungsmoduls (18) zugeführten Außenluftstroms (A_{Z}) ein Bypasskanal (50) zugeordnet ist, der zum Führen des Außenluftstromes (A_{Z}) vorbei am Wärmeübertrager (28) eingerichtet ist, und
wobei das Lüftungsmodul (18) dazu eingerichtet ist, den Massenstrom des über den Wärmeübertrager (28) und/oder den Bypasskanal (50) geführten Außenluftstroms (A_{Z}) zu steuern.

2. Haustechnikgerät (10) nach Anspruch 1,
**dadurch gekennzeichnet, dass** der Zuluftstrang (30) in einen ersten Teilstrang (46) zum Zuführen eines Teilstroms des Außenluftstroms (A_{Z1}) zum Lüftungsmodul (18) und in einen parallel zum ersten Teilstrang (46) angeordneten, zweiten Teilstrang (48) zum Zuführen eines Teilstroms des Außenluftstroms (A_{Z2}) zur Wärmepumpe (16) unterteilt ist, wobei der Bypasskanal (50) dem ersten Teilstrang (46) zugeordnet ist.

3. Haustechnikgerät (10) nach Anspruch 1 oder 2,
**dadurch gekennzeichnet, dass** der Zuluftstrang (30), vorzugsweise der erste Teilstrang (46), in seinem Einlassbereich (54) ein Filterelement (52) aufweist und der Bypasskanal (50), insbesondere im ersten Teilstrang (46), hinter dem Filterelement (52) abzweigt.

4. Haustechnikgerät (10) nach einem der Ansprüche 1 bis 3,
**dadurch gekennzeichnet, dass** der Zuluftstrang (30), insbesondere der erste Teilstrang (46) des Zuluftstrangs (30), in einem seitlich zum Wärmeübertrager (28) versetzt angeordneten Abschnitt des Gehäuses (12) ausgebildet ist.

5. Haustechnikgerät (10) nach einem der Ansprüche 2 bis 4,
**dadurch gekennzeichnet, dass** der erste Teilstrang (46) des Zuluftstrangs (30) ausgehend von seinem Einlassbereich (54) einen im Wesentlichen nach unten gerichtete Strömungskanal für den in Richtung des Wärmeübertragers (28) geleiteten Außenluftstrom (A_{Z}) definiert und der Bypasskanal (50) ausgehend vom Einlassbereich (54) des ersten Teilstrangs (46) einen im Wesentlichen schräg nach oben gerichteten Strömungskanal definiert.

6. Haustechnikgerät (10) nach Anspruch 5,
**dadurch gekennzeichnet, dass** die Strömungsrichtung vom ersten Teilstrang (46) und die Strömungsrichtung des Bypasskanals (50) etwa in entgegengesetzte Richtungen zueinander verlaufen.

7. Haustechnikgerät (10) nach einem der Ansprüche 2 bis 6,
**dadurch gekennzeichnet, dass** entlang eines Abschnitts des ersten Teilstrangs (46) des Zuluftstrangs (30) und entlang eines Abschnitts des Bypasskanals (50) jeweils ein Klappenteil (56, 56') angeordnet ist, welches zwischen einer den ersten Teilstrang (46) und/oder den Bypasskanal (50) versperrenden Schließstellung und einer den ersten Teilstrang (46) und/oder den Bypasskanal (50) freigebenden Offenstellung hin und her bewegbar ist.

8. Haustechnikgerät (10) nach Anspruch 7,
**dadurch gekennzeichnet, dass** jedes Klappenteil (56, 56') einen Stellantrieb (60) zum Verstellen des Klappenteiles (56, 56') zwischen seiner Schließstellung und seiner Offenstellung aufweist.

9. Haustechnikgerät (10) nach einem der vorstehenden Ansprüche,
**dadurch gekennzeichnet, dass** ein Abschnitt und/oder Bereiche des Bypasskanals (50) mittels eines separat zum Gehäuse (12) ausgebildeten Kanalteils (58) ausgebildet ist, das zumindest Wandbereiche des zweiten Teilstrangs (48) des Zuluftstrangs (30) innerhalb des Gehäuses (12) definiert.

10. Haustechnikgerät (10) nach einem der vorstehenden Ansprüche,
**gekennzeichnet durch** eine Steuereinrichtung, welche dazu eingerichtet ist, den Massenstrom des über den Bypasskanal (50) geführten Außenluftstroms (A_{Z}) in Abhängigkeit von den erfassten Außenluft- und/oder Ablufttemperaturen zu steuern, vorzugsweise durch Ansteuern der die Klappenteile (56, 56') bewegenden Stellantriebe (60).

11. Haustechnikgerät (10) nach einem der vorstehenden Ansprüche,
**dadurch gekennzeichnet, dass** innerhalb des Gehäuses (12) mindestens eine Lüftereinheit (26, 42) angeordnet ist, welche zum Erzeugen des Außenluftstroms (A_{Z}) eingerichtet ist, und zusätzlich mindestens eine Lüftereinheit (26, 44) angeordnet ist, welche zum Erzeugen des Abluftstroms (A_{F}) eingerichtet ist.

12. Verfahren zum Betreiben eines Haustechnikgeräts (10), insbesondere eines Haustechnikgeräts (10) nach einem der vorstehenden Ansprüche, wobei das Haustechnikgerät (10) als Kombigerät ausgebildet ist, umfassend eine Wärmepumpe (16) und ein Lüftungsmodul (18) zur gesteuerten Be-und/oder Entlüftung von mit dem Lüftungsmodul (18) fluidleitend verbundenen Räumen eines Gebäudes, wobei das Lüftungsmodul (18) einen Wärmeübertrager (28) zum Übertragen von Wärme zwischen den durch das Lüftungsmodul (18) geführten Außenluft- und Abluftstrom (A_{Z}, A_{F}) aufweist, umfassend zumindest den Schritt:
- Umlenken des Außenluftstroms (A_{Z}) innerhalb des Gehäuses (12) vorbei an dem im Lüftungsmodul (18) angeordneten Wärmeübertrager (28), bei aktiviertem Kühlbetrieb des Haustechnikgeräts (10) und sofern die erfasste Außenlufttemperatur unterhalb der erfassten Ablufttemperatur liegt, vorzugsweise mittels eines Bypasskanals (50), welcher einem im Lüftungsmodul (18) ausgebildeten Zuluftstrang (30) zugeordnet ist.
